# EUROPÄISCHE PATENTSCHRIFT

(11) **EP 0 848 471 B1**
(45) Veröffentlichungstag und Bekanntmachung des Hinweises auf die Patenterteilung: **07.08.2002**
(21) Anmeldenummer: 97119235.6
(22) Anmeldetag: 04.11.1997
(51) Int. Cl.: H02H 3/33

(54) **Fehlerstromschutzeinrichtung**
Earth fault protection device
Dispositif de protection contre les courants de défaut

(30) Priorität: 12.12.1996 DE 19651718
(43) Veröffentlichungstag der Anmeldung: 17.06.1998
(73) Patentinhaber: HEINRICH KOPP AG, D-63796 Kahl am Main (DE)
(72) Erfinder: Fleckenstein, Hans-Jürgen, 63776 Schimborn (DE)
(74) Vertreter: Reinhard - Skuhra - Weise & Partner

(56) Entgegenhaltungen:
- EP-A- 0 763 745
- EP-A- 0 806 825
- EP-A- 0 866 535
- FR-A- 2 538 179
- PERHO J ET AL: "AC NETWORK AS A TN- S SYSTEM AND ITS SUPERVISING" PROCEEDINGS OF THE INTERNATIONAL TELECOMMUNICATIONS ENERGY CONFERENCE. (INTELEC), FIRENZE, OCT. 15 - 18, 1989, Bd. 1, Nr. CONF. 11, 15. Oktober 1989, Seiten 9.9 1-06, XP000129999 INSTITUTE OF ELECTRICAL AND ELECTRONICS ENGINEERS

## Beschreibung

Die Erfindung betrifft eine Fehlerstromschutzeinrichtung zur Isolationsüberwachung elektrischer Stromkreise.

Ortsveränderliche Schutzeinrichtungen können nach DIN VDE 0661 Fehlerdifferenzströme über einen Summenstromwandler erfassen, die von betriebsstromführenden aktiven Leitern, d.h. von Phasen- und Null-Leitern im Fehlerfall gegen Erde fließen oder von fehlerhaft spannungsführenden Schutzleitern von den unter Spannung stehenden Schutzkontakten über den Schutzleiter gegen Erde fließen. Bei Überschreiten eines Ansprechwertes werden dabei die beiden aktiven Leiter und der Schutzleiter vom Netz getrennt. Der zu überwachende Stromkreis wird durch die ortsveränderliche Schutzeinrichtung nach DIN VDE 0661 bei Erkennen von Fehlerstromen allpolig, also einschließlich des Schutzleiters abgeschaltet.
Das Trennen des Schutzleiters vom Netz kann sich jedoch nachteilig auswirken. Ist ein Betriebsmittel bzw. Arbeitsgerät, wie beispielsweise eine Bohrmaschine über eine herkömmliche Schutzeinrichtung am Netz angeschlossen, besteht kein ausreichender Schutz gegen einen elektrischen Kontakt mit einer fremdspannungsführenden Leitung, beispielsweise durch Anbohren der Leitung. Nach dem Anbohren der fremdspannungsführenden Leitung liegt die Fremdspannung an dem Gehäuse des Arbeitsgerätes an und es entsteht ein Fehlerstrom durch den Summenstromwandler der Schutzeinrichtung, welche das Arbeitsgerät allpolig, d.h. einschließlich des Schutzleiters PE abschaltet. Durch dieses Abschalten verliert der Schutzleiter PE seine Funktion und eine über das Arbeitsgerät bedienende Person befindet sich in einem lebensgefährlichen Hauptschluß mit der Fremdspannung solange bis ein vorgeschaltetes Schutzorgan abschaltet.
Zur Vermeidung dieses Nachteils sind Schutzeinrichtungen entwickelt worden (EP-A-0 806 825, Veröffentlichung nach Art. 54(3) EPÜ), die den Schutzleiter bei Fehlerströmen, die durch Fremdspannung aus einem Fremdnetz oder durch netzseitige Fehler verursacht werden, nicht abschaltet. Bei diesen Schutzeinrichtungen ist der Schutzleiter an dem Summenstromwandler vorbeigeführt. Der Summenstromwandler kann daher bei diesen Schutzeinrichtungen nicht zur Erkennung einer auf dem Schutzleiter befindlichen Spannung verwendet werden. Diese Schutzeinrichtungen besitzen daher zusätzlich einen Sensor zur Erkennung einer auf dem Schutzleiter auftretenden Spannung. Dieser Sensor nützt den Körperwiderstand der Person aus, welche das Arbeitsgerät bedient, um eine auf dem Schutzleiter vorhandene Spannung zu erfassen. Da die Bedienperson das mit dem Schutzleiter verbundene Gehäuse des Arbeitsgerätes beispielsweise mit der Hand berührt, fließt bei Auftreten einer Spannung auf dem Schutzleiter ein Strom über den Körperwiderstand der Bedienperson zur Erde ab. Da der Körperwiderstand der Bedienperson relativ groß ist, wenn die Bedienperson gegen Erde gut isoliert ist, beispielsweise bei Tragen entsprechender Schuhe, muß der Sensor sehr empfindlich sein, d.h. er muß auch sehr kleine Ströme erfassen können. Diese hohen Anforderungen an den Sensor können zu Einschränkungen bei der Bedienbarkeit der Schutzeinrichtung führen. Ein weiterer gravierender Nachteil dieser Schutzeinrichtungen mit Sensor besteht darin, daß der Sensor bei einem sehr hohen Erdwiderstand der Bedienperson zu unempfindlich ist, d.h. einen über den Körper der Bedienperson fließenden Körperstrom nicht erfaßt. In einem solchen Fall läßt sich die Schutzeinrichtung einschalten, obwohl eine berührungsgefährliche Spannung an dem Schutzleiter und somit an dem Gehäuse des Arbeitsgerätes anliegt. Eine solche gefährliche Spannung kann beispielsweise dadurch hervorgerufen sein, daß der Phasenleiter und der Schutzleiter durch falschen Anschluß vertauscht sind. Der Erdwiderstand der Bedienperson hängt von den Einzelumständen und der Umgebung, in der sich die Person befindet ab. Da die Höhe des durch den Sensor erfaßten Stromes von diesem nicht festgelegten Erdwiderstand der Bedienperson abhängt, kann der fließende Erdstrom unterhalb der unteren Empfindlichkeitsgrenze des Sensors liegen und es kommt daher nicht in jedem Fall zu einer Abschaltung der Schutzeinrichtung auch bei Anliegen einer berührungsgefährlichen Spannung an dem Schutzleiter. Diese berührungsgefährliche Spannung bewirkt einen über den Körper der Bedienperson fließenden Körperstrom, welcher zwar eine kleine Stromstärke aufweist, aber dennoch lebensgefährlich sein kann.

Es ist daher die Aufgabe der Erfindung, eine Schutzeinrichtung zu schaffen, die bei Auftreten von Fehlerströmen auf dem Phasen- oder Null-Leiter und bei Auftreten eines Körperstroms auf dem Schutzleiter den zu überwachenden Stromkreis sicher vom Netz trennt.

Diese Aufgabe wird durch eine Schutzeinrichtung mit den im Patentanspruch 1 angegebenen Merkmalen gelöst.

Bevorzugte weitere Ausgestaltungen der Erfindung ergeben sich aus den nachgeordneten Ansprüchen.

Ausführungsformen der erfindungsgemäßen Fehlerstromschutzeinrichtung werden in den Zeichnungen dargestellt und werden im folgenden zur Erläuterung weiterer Merkmale beschrieben.

Es zeigen:
- Figur 1: eine erste Ausführungsform der erfindungsgemäßen Fehlerstromschutzeinrichtung;
- Figur 2: eine zweite Ausführungsform der erfindungsgemäßen Fehlerstromschutzeinrichtung mit einer Schutzleitererkennungseinrichtung.

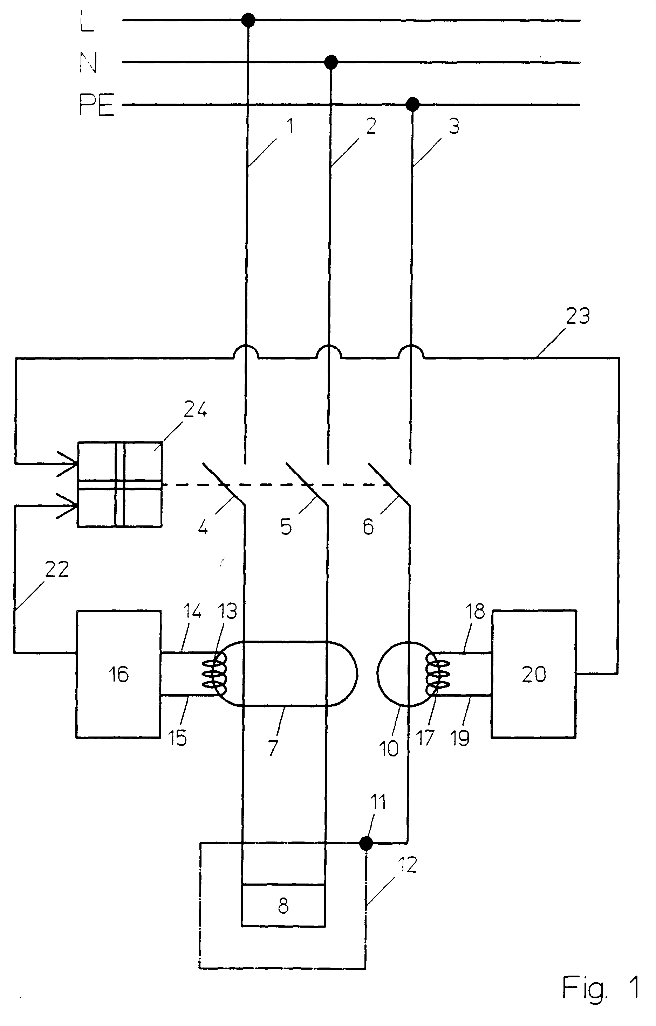

Zunächst wird der Aufbau der erfindungsgemäßen Fehlerstromschutzeinrichtung in Figur 1 beschrieben. Mit 1 ist der Phasenleiter L, mit 2 der Neutralleiter N und mit 3 der Schutzleiter PE bezeichnet. In jeden Leiter 1, 2, 3 ist jeweils ein Schalter 4, 5, 6 geschaltet, welche mechanisch miteinander gekuppelt sind. Die Phasen- und Null-Leiter 1, 2 werden durch einen ersten Summenstromwandler 7 geführt, welcher von den Leitern 1, 2, 3 her betrachtet hinter den Schaltern 4, 5 liegt. Der Phasen- und Null-Leiter 1, 2 bilden die Primärwicklung des Summenstromwandlers 7. An die Leiter 1, 2 ist ein Verbraucherstromkreis 8 angeschlossen, beispielsweise der Elektromotor einer Bohrmaschine. Der Schutzleiter 3 bildet ferner die Primärwicklung eines zweiten Summenstromwandlers 10, der hinter dem Schalter 6 liegt. Der Schutzleiter 3 ist an einem Anschlußpunkt 11 mit dem gestrichelt angedeuteten Gehäuse 12 verbunden, in welchem sich der Verbraucherstromkreis 8 befindet. Der erste Summenstromwandler 7 weist eine Sekundärwicklung 13 auf, die über Leitungen 14, 15 an eine erste Auswerteschaltung 16 angeschlossen ist. Der zweite Summenstromwandler 10 besitzt eine Sekundärwicklung 17, die über Leitungen 18, 19 an eine zweite Auswerteschaltung 20 angeschlossen ist. Die erste 16 und die zweite Auswerteschaltung 20 ist jeweils über eine Steuerleitung 22 bzw. 23 mit einer Auslöseeinrichtung 24 verbunden. Die Auslöseeinrichtung 24 ist mechanisch mit den Schaltern 4, 5, 6 zu deren Betätigung gekuppelt.

Im folgenden wird die Funktionsweise der erfindungsgemäßen Fehlerstromeinrichtung in Figur 1 beschrieben.

Die an die Sekundärwicklung 13 des ersten Summenstromwandlers 7 angeschlossene erste Auswerteschaltung 16 erfaßt einen auf dem Phasen-Leiter 1 oder auf dem Null-Leiter 2 fließenden Fehlerstrom und gibt dann ohne zeitliche Verzögerung ein Steuersignal über die Steuerleitung 22 an die Auslöseeinrichtung 24 ab. Die erste Auswerteschaltung 16 weist eine niedrige Ansprechschwelle auf und liefert ein Steuersignal bereits bei geringen, auf den Leitungen 1, 2 auftretenden Fehlerströmen an die Auslöseeinrichtung 24 ab. Die Auslöseeinrichtung 24 öffnet dann allpolig die Schalter 4, 5, 6, wodurch der zu überwachende Stromkreis 8 und dessen Gehäuse 12 vom Netz getrennt werden.

Isolationsfehler, die Fehlerströme auf den Leitungen 1, 2 hervorrufen, werden durch die Auswerteschaltung 16 erkannt und die Bedienperson des Verbrauchers wird durch Öffnen der Schalter 4, 5, 6 geschützt, sobald ein Fehlerstrom erfaßt wird.

Die zweite Auswerteschaltung 20, welche an die Sekundärwicklung 17 des zweiten Summenstromwandlers 10 angeschlossen ist, weist einen nicht weiter bezeichneten Detektor zum Erfassen eines vorbestimmten Stromwertebereichs für den auf dem Schutzleiter 3 fließenden Strom auf. Liegt der Stromwert innerhalb des vorbestimmten Stromwertebereichs, erzeugt die zweite Auswerteschaltung 20 ein Steuersignal über die Steuerleitung 23 zur Auslöseeinrichtung 24. Die Auslöseeinrichtung 24 öffnet nach Empfang des über die Steuerleitung 23 ankommenden Steuersignals die Schalter 4, 5, 6, so daß der zu überwachende Stromkreis 8 einschließlich Gehäuse 12 vom Netz getrennt wird.

Die zweite Auswerteschaltung 20 weist vorzugsweise eine Verzögerungsschaltung auf, um das Steuersignal zeitverzögert über die Steuerleitung 23 an die Auslöseeinrichtung 24 zu geben. Die durch die Verzögerungsschaltung hervorgerufene Zeitverzögerung ist vorzugsweise einstellbar und beträgt vorzugsweise 30 bis 40 ms.

Liegt die Stromstärke des auf dem Schutzleiter 3 fließenden Stromes außerhalb des vorbestimmten Stromwertebereichs, erzeugt die Auswerteschaltung 20 kein Steuersignal zur Auslöseeinrichtung 24. Der Stromwertebereich, bei welchem ein Steuersignal durch die Auswerteschaltung 20 an die Auslöseeinrichtung abgegeben wird, ist vorzugsweise einstellbar. Der einstellbare Stromwertebereich wird durch einen unteren Grenzwert und einen oberen Grenzwert bestimmt. Bei einer bevorzugten Ausführungsform liegt der untere Grenzwert des Stromwertebereichs bei etwa 0 A und der obere Grenzwert bei etwa 0,5 A bis 1 A liegt.

Wenn die Stromstärke des auf dem Schutzleiter 3 fließenden Stromes größer als der obere Grenzwert des einstellbaren Stromwertebereichs ist, erfolgt kein Öffnen der Schalter 4, 5, 6 durch die Auslöseeinrichtung 24. Auf diese Weise wird verhindert, daß durch eine Fremdspannung verursachte Fehlerströme auf dem Schutzleiter 3, die zu einem Öffnen des Schalters 6 führen, wodurch der Schutzleiter 3 seine Funktion verlieren würde.
Bei einem geöffneten Schalter 6 befände sich die Bedienperson solange im Hauptschluß zu der Fremdspannung bis eine vorgeschaltete Schutzeinrichtung abschaltet. Bei der Festlegung des Stromwertebereichs wird die Tatsache berücksichtigt, daß die Stromhöhen von Fehlerströmen, welche durch Fremdspannung verursacht werden, viel größer als etwa 0,5 A bis 1 A sind. Dies liegt daran, daß beispielsweise beim Anbohren einer Leitung, an der eine Fremdspannung anliegt, der Widerstand gegenüber der Fremdspannung immer sehr-kleine Werte annimmt, d.h. die Leiter niederohmig mit Werten kleiner 250 Ohm überbrückt werden. Die zweite Auswerteschaltung 20 erkennt den auf dem Schutzleiter 3 fließenden hohen Fehlerstrom als einen Strom, welcher durch eine Fremdspannung verursacht ist, und steuert die Auslöseeinrichtung 24 derart, daß die Schalter 4, 5, 6 nicht geöffnet werden, sondern geschlossen bleiben.

Ist die Stromstärke des über den Schutzleiter 3 fließenden Stromes jedoch geringer als der in der zweiten Auswerteschaltung 20 eingestellte obere Grenzwert des Stromwertebereichs, erkennt die zweite Auswerteschaltung 20 diesen Strom als einen Körperstrom, der im Hauptschluß über den Körperwiderstand der Bedienperson zur Erde abfließt. In diesem Fall wird ein Steuersignal zeitverzögert an die Auslöseeinrichtung 24 abgegeben und die Schalter 4, 5, 6 allpolig geöffnet. Durch das Öffnen des Schalters 6 wird der über den Schutzleiter 3 und den relativ großen Körperwiderstand der Bedienperson zur Erde abfließende Körperstrom unterbrochen. Die Abschaltung durch die zweite Auswerteschaltung 20 erfolgt zeitverzögert, damit bei einer schnellen Änderung der Stromstärke auf dem Schutzleiter 3 von 0 A auf eine Stromstärke oberhalb des oberen Grenzwertes zwischenzeitlich kein Öffnen des Schalters 6 erfolgt. Dies stellt sicher, daß das Öffnen des Schalters 6 lediglich dann erfolgt, wenn die Stromstärke des über den Schutzleiters 3 fließenden Stromes unterhalb des oberen Grenzwertes liegt.

Die erfindungsgemäße Schutzeinrichtung weist somit zwei voneinander völlig unabhängig arbeitende Schutzsysteme auf. Das erste Schutzsystem, welches aus dem ersten Summenstromwandlers 7, der ersten Auswerteschaltung 16 und der Auslöseeinrichtung 24 besteht, bewirkt ein Öffnen der Schalter 4, 5, 6 bei allen netzseitigen Fehlerströmen gleich welcher Stromhöhe. Das zweite Schutzsystem, welches aus dem zweiten Summenstromwandler 10, der zweiten Auswerteschaltung 20 sowie der Auslöseeinrichtung 24 besteht, öffnet die Schalter 4, 5, 6 allpolig, wenn die Stromstärke des auf den Schutzleiter 3 fließenden Stromes niedriger als ein einstellbarer Schwellenwert ist. Ist die Stromstärke des auf dem Schutzleiter 3 fließenden Stromes größer als dieser Schwellenwert, werden die Schalter 4, 5, 6 durch das zweite Schutzsystem nicht geöffnet.

Bei einer Fehlerstromschutzeinrichtung, welche einen Detektor zum Erfassen einer auf dem Schutzleiter 3 vorhandenen Spannung aufweist, genügt eine relativ geringe Empfindlichkeit des Sensors gegenüber Körperströmen. Das zweite Schutzsystem erfaßt selbst geringste Körperströme und führt zu einer sicheren Unterbrechunc des Körperstroms durch Öffnen des Schalter 6.

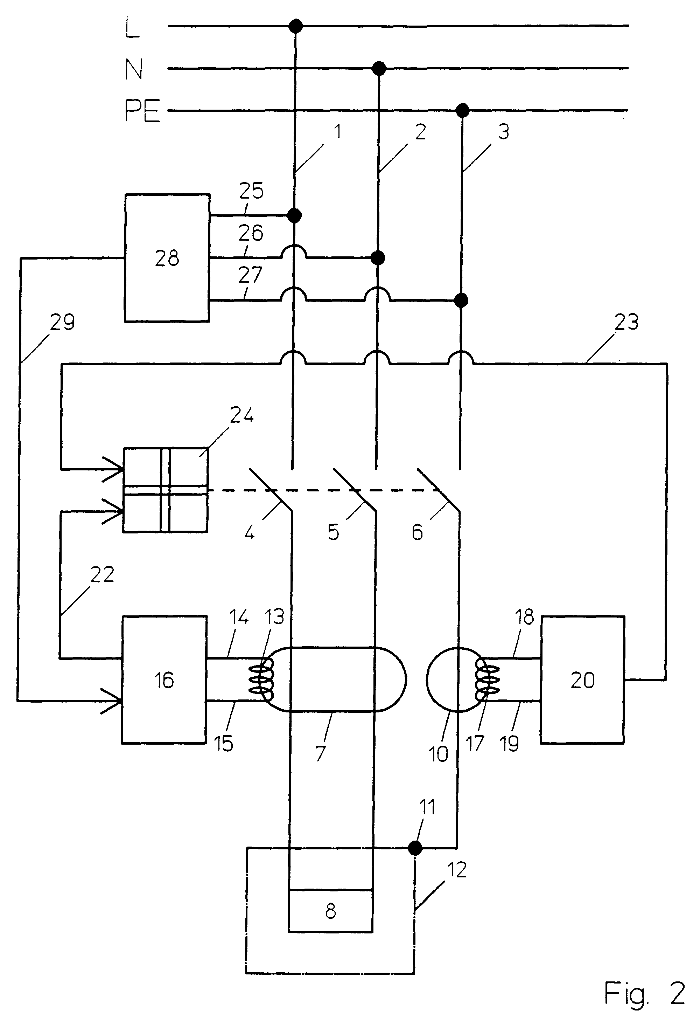

Bei einer weiteren Ausführungsform der erfindungsgemäßen Fehlerstromschutzeinrichtung, wie sie in Figur 2 gezeigt ist, ist zusätzlich eine Erkennungseinrichtung vorgesehen, welche erkennt, ob der Phasen-, Neutral- und Schutzleiter 1, 2, 3 korrekt angeschlossen ist. Eine dritte Auswerteschaltung 28 ist über eine erste Anschlußleitung 25 an den Phasenleiter 1 über eine zweite Anschlußleitung 26 an den Neutralleiter 2 und über eine dritte Anschlußleitung 27 an den Schutzleiter 3 angeschlossen. Die dritte Auswerteschaltung 28 ist ferner über eine Steuerleitung 29 mit der ersten Auswerteschaltung 16 verbunden. Sind die drei Leiter 1, 2, 3 korrekt angeschlossen, fließt ein durch nicht gezeigte Widerstände begrenzter Strom in die dritte Auswerteschaltung 28. Solange dieser Strom bzw. Überwachungsstrom fließt, erkennt die dritte Auswerteschaltung 28, daß die drei Leiter 1, 2, 3 korrekt angeschlossen sind und gibt kein Steuersignal über die Steuerleitung 29 an die erste Auswerteschaltung 16 ab.
Bei einem nicht angeschlossenen bzw. unterbrochenen Schutzleiter 3 wird der in die dritte Auswerteschaltung 28 fließende Überwachungsstrom unterbunden und die dritte Auswerteschaltung 28 erkennt, daß kein korrekter Anschluß der Leiter 1, 2, 3 vorliegt. In diesem Fehlerfall gibt die dritte Auswerteschaltung 28 ein Auslösesteuersignal über die Steuerleitung 29 an die erste Auswerteschaltung 16 ab. Die erste Auswerteschaltung 16 gibt beim Empfang des von der dritten Auswerteschaltung 28 kommenden Auslösesteuersignales ihrerseits ein Steuersignal über die Steuerleitung 22 an die Auslöseeinrichtung 24 ab. Die Auslöseeinrichtung 24 öffnet dann allpolig die Schalter 4, 5, 6, wodurch der zu überwachende Stromkreis 8 und dessen Gehäuse 12 vom Netz getrennt werden.

Bei einer weiteren bevorzugten Ausführungsform wird durch eine Anzeigevorrichtung der Bedienperson der fehlerhafte Anschluß des Schutzleiters angezeigt.

## Patentansprüche

1. Fehlerstromschutzeinrichtung, insbesondere zur Isolationsüberwachung elektrischer Stromkreise, mit
einem ersten Summenstromwandler (7), der eine aus Phasenleiter (1) und neutralem Leiter (2) gebildete Primärwicklung und eine Sekundärwicklung (13) aufweist, welche an eine erste Auswerteschaltung (16) angeschlossen ist, mit
einem zweiten Summenstromwandler (10), dessen Primärwicklung durch den Schutzleiter (3) gebildet ist und dessen Sekundärwicklung (17) an eine zweite Auswerteschaltung (20) angeschlossen ist, wobei in Phasenleiter (1), neutralem Leiter (2) und Schutzleiter (3) jeweils ein Schalter (4, 5, 6) angeordnet ist, und mit einer mit der ersten und zweiten Auswerteschaltung (16, 20) verbundenen Auslöseeinrichtung (24) zum Betätigen der in Phasenleiter (1), neutralen Leiter (2) und Schulzleiter (3) jeweils eingesetzten Schalter (4, 5, 6),
wobei die zweite Auswerteschaltung (20) einen Detektor zum Erfassen eines vorbestimmten Stromwertebereichs des auf dem Schutzleiter (3) fließenden Stromes enthält,
bei der die zweite Auswerteschaltung (20) eine Verzögerungsschaltung aufweist und bei einer innerhalb des vorbestimmten Stromwertebereichs gelegenen Stromstärke die Auslösereinrichtung (24) zeitverzögert zur Öffnung der Schalter (4, 5, 6) aktiviert.

2. Fehlerstromschutzeinrichtung nach Anspruch 1,
**dadurch gekennzeichnet,**
**daß** eine dritte Auswerteschaltung (28) zum Erkennen eines korrekten Anschlusses von Phasenleiter (1), neutralem Leiter (2) und Schutzleiter (3) vorgesehen ist.

3. Fehlerstromschutzeinrichtung nach Anspruch 2,
**dadurch gekennzeichnet,**
**daß** die dritte Auswerteschaltung (28) zum Erkennen eines unterbrochenen oder nicht angeschlossenen Schutzleiters (3) vorgesehen ist.

4. Fehlerstromschutzeinrichtung nach einem der vorangehenden Ansprüche,
**dadurch gekennzeichnet,**
**daß** der Stromwertebereich zwischen etwa 0 A und etwa 0,5 A bis 1 A liegt.

5. Fehlerstromschutzeinrichtung nach einem der vorangehenden Ansprüche,
**dadurch gekennzeichnet,**
**daß** die Zeitverzögerung der Verzögerungsschaltung auf etwa maximal 40 ms eingestellt ist.

## Claims

1. A residual current protection device especially for monitoring the isolation of electrical circuits comprising:
a first sum-current transformer (7) containing a primary winding formed of a phase conductor (1) and a neutral conductor (2) and a secondary winding (13) being connected to a first evaluation circuit (16)
comprising a second sum-current transformer (10) a primary winding of which being formed by a protective conductor (3) and a secondary winding (17) of which being connected to a second evaluation circuit (20) whereat in the phase conductor (1), the neutral conductor (2) and the protective conductor (3) a switch (4, 5, 6) is provided,
further comprising a trigger device (24) being connected to said first and second evaluation circuit (16, 20) for triggering said switches (4, 5, 6) inserted in said phase conductor (1), neutral conductor (2) and protective conductor (3) respectively, whereat said second evaluation circuit (20) comprises a detector for detecting a predetermined current range of the current flowing in said protective conductor (3), said second evaluation circuit (20) comprising a delay circuit triggering the trigger device (24) with a time delay to open the switch (4, 5, 6) if the current value is within said predetermined current range.

2. A residual current protection device according to claim 1 **characterized in that** a third evaluation circuit (28) is provided for detecting an accurate connection of said phase conductor (1), neutral conductor (2) and protective conductor (3).

3. Residual current protection device according to claim 2, **characterized in that** said third evaluation circuit (28) being provided for identifying an interrupted or not connected protective conductor (3).

4. Residual current protection device according to one of the preceding claims **characterized in that** the current range substantially is in between 0 A and about 0,5 A to 1 A.

5. Residual current protection device according to one of the preceding claims, **characterized in that** the time delay of the delay circuit is set to a maximum of about 40 ms.

## Revendications

1. Dispositif de protection à courant , notamment pour le contrôle d'isolation de circuits électriques, comportant
un premier transformateur d'intensité somme (7), qui possède un enroulement primaire formé par des conducteurs de phase (1) et un conducteur neutre (2), et un enroulement secondaire (13), qui est connecté à un premier circuit d'évaluation (16), et comportant
un second transformateur d'intensité somme (10) dont l'enroulement primaire est formé par le conducteur de protection (3) et dont l'enroulement secondaire (17) est raccordé à un second circuit d'évaluation (20), un interrupteur respectif (4,5,6) étant disposé dans le conducteur de phase (1), le conducteur neutre (2) et le conducteur de protection (3), et comportant un dispositif de déclenchement (24) qui est relié aux premier et second circuits d'évaluation (16,20) et sert à actionner les interrupteurs (4,5,6) respectivement installés dans le conducteur de phase (1), le conducteur neutre (2) et le conducteur de protection (3).

2. Dispositif de protection à courant selon la revendication 1, **caractérisé en ce qu'**il est prévu un troisième circuit d'évaluation (28) pour identifier un raccordement correct du conducteur de phase (1), du conducteur neutre (2) et du conducteur de protection (3).

3. Dispositif de protection à courant selon la revendication 2, **caractérisé en ce que** le troisième circuit d'évaluation (28) est prévu pour l'identification d'un conducteur de protection (3) interrompu ou non raccordé.

4. Dispositif de protection à courant selon l'une des revendications précédentes, **caractérisé en ce que** la gamme des valeurs du courant est comprise entre environ 0 A et environ 0,5 A à 1 A.

5. Dispositif de protection à courant selon l'une des revendications précédentes, dans lequel le second circuit d'évaluation (20) contient un détecteur servant à détecter une gamme prédéterminée de valeurs du courant qui circule dans le conducteur de protection (3),
dans lequel le second circuit d'évaluation (20) comporte un circuit de retardement et, dans le cas d'une intensité de courant située à l'intérieur de la gamme prédéterminée de valeurs du courant, active d'une manière retardée le dispositif de déclenchement (24) pour l'ouverture des interrupteurs (4,5,6).
